# EUROPÄISCHE PATENTSCHRIFT

(11) **EP 1 664 228 B1**
(45) Veröffentlichungstag und Bekanntmachung des Hinweises auf die Patenterteilung: **25.01.2012**
(21) Anmeldenummer: 04765282.1
(22) Anmeldetag: 16.09.2004
(51) Int. Cl.: C09J 175/16, C09J 11/04, C08K 3/34, C08K 3/00

(54) **KLEBSTOFF-ZUSAMMENSETZUNG MIT BARRIERE-EIGENSCHAFTEN**
ADHESIVE COMPOSITION WITH BARRIER CHARACTERISTICS
COMPOSITION D'ADHESIF PRESENTANT DES CARACTERISTIQUES DE BARRIERE

(30) Priorität: 25.09.2003 DE 10344449
(43) Veröffentlichungstag der Anmeldung: 07.06.2006
(73) Patentinhaber: Henkel AG & Co. KGaA, 40589 Düsseldorf (DE)
(72) Erfinder: HENKE, Günter, 41470 Neuss (DE); KRÜDENSCHEIDT, Markus, 40764 Langenfeld (DE); MECKEL-JONAS, Claudia, 41468 Neuss (DE)
(86) Internationale Anmeldenummer: PCT/EP2004/010382
(87) Internationale Veröffentlichungsnummer: WO 2005/033242

(56) Entgegenhaltungen:
- WO-A-02/26908
- WO-A-2004/083272
- DE-A- 19 960 411

## Beschreibung

Die Erfindung betrifft eine Klebstoff-Zusammensetzung mit Barriere-Eigenschaften, ein Verfahren zur Herstellung von Verbundfolien unter Verwendung der erfindungsgemäßen Klebstoff-Zusammensetzung mit Barriere-Eigenschaften sowie die Verwendung dieser Verbundfolien zur Verpackung.

Viele Güter erfordern für Transport oder Lagerung einen Schutz vor der Umgebungsluft oder der umgebenden Atmosphäre, andere, insbesondere stark wasserhaltige Güter müssen vor dem Austrocknen geschützt werden. Sie müssen daher in einer Weise verpackt werden, die geeignet ist, alle oder bestimmte Bestandteile der Umgebungsatmosphäre möglichst vollständig auszuschließen oder die Diffusion des Wassers oder von Aromastoffen in die Umgebungsatmosphäre und damit eine Austrocknung oder geschmackliche Veränderung des Verpackungsgutes zu verhindern.

Während beispielsweise Treib- und Heizstoffe hierzu in entsprechenden Containern transportiert und gelagert werden, werden im Bereich der medizinischen Applikation (Arzneimittel, Ampullen) und in der Lebensmittel/- Genußmittelindustrie häufig flexible Verpackungen eingesetzt.

Ein besonders kritischer Bestandteil der Umgebungsatmosphäre ist Sauerstoff. Die Anwesenheit von Sauerstoff kann bei vielen Packgütern, wie z.B. Lebensmitteln oder Arzneimitteln, zu einem oxidativen Verderb oder einem Wachstum vom Keimen führen, die das Packgut ebenfalls verderben können.

Für die Herstellung von flexiblen Verpackungen werden in großem Umfange Polymerfilme aus thermoplastischen Filmen verwendet. Diese Polymerfilme oder Folien werden üblicherweise mit einfachen formgebenden Verfahren wie Extrusion oder Blasformung hergestellt.

Da das gesamte Anforderungsspektrum an eine moderne Verpackungsfolie nicht durch einen Polymerfilm aus einem einzigen Polymer befriedigend erfüllt werden kann, ist man bereits seit geraumer Zeit dazu übergegangen, sogenannte Verbundfolien d.h. Folien mit einem mehrschichtigem Aufbau herzustellen. Um die wesentlichen Grundeigenschaften einer Verpackungsfolie wie Reißfestigkeit, Geschmacksneutralität, Barriereeigenschaften zu erzielen, werden verschiedene Verfahren zum Verbinden der einzelne Folienbestandteile zu einer Verbundfolie verwendet.

Beispielsweise werden Mehrschichtsysteme mit separaten Barriereschichten aufgebaut, indem man Polyvinylidenchlorid (PVDC)-, Ethylenvinylalkohol (EVOH)- und/oder Aluminium- Folien mit Polyethylenfolien, Polyesterfolien und / oder Polyvinylchlorid- Folien kombiniert. Diese Mehrschichtsysteme können entweder durch Coextrusion oder durch Verkleben von separat hergestellten Folien aufgebaut werden.

In einem weiteren Verfahren werden Verpackungsfolien, z.B. auf der Basis von Polyethylenterephthalat oder biaxial orientiertem Polypropylen, mit einer Aluminium- und/oder Siliciumoxid- Schicht (im Vakuum) bedampft.

Ein anderes bekanntes Verfahren benutzt die Oberflächenveredelung der flexiblen Verpackungsfolien durch Beschichten der Folien mit Lösemittel- bzw. wasserbasierten Polyvinylidenchloridlösungen oder Dispersionen. Beschichtungsmittel und Kleber auf Basis PVDC oder EVOH haben auf PolyolefinFolien häufig nur eine unzureichende Haftfestigkeit. Verbunde von PolyolefinFolien mit derartigen Klebern können bereits per Hand aufgetrennt werden. Gegebenfalls muß daher in einem vorgeschalteten Verfahrensschritt ein Primer aufgebracht werden, um eine gute Haftung der Oberflächenbeschichtung oder des Klebers auf der Substratfolie zu bewirken.

Diese bekannten Verfahren zur Herstellung von Verpackungs-Nerbundmaterialien mit guten Barriereeigenschaften sind im allgemeinen sehr aufwendig und kostenintensiv. Die Verwendung von Metallschichten entweder durch Aufdampfen von Metall oder durch Kaschieren von Metallfolien führt in der Praxis immer wieder zu Fehlstellen durch eine Vielzahl feiner Löcher in der Metallschicht, die die ansonsten gute Barrierewirkung der Metallschicht erheblich beeinträchtigen.

Auf der Suche nach einfacheren Verfahren besteht ein Bedarf für Klebstoffe, die neben der erforderlichen Klebewirkung zusätzlich Barrierewirkungen gegenüber Sauerstoff, Aromastoffen und Wasserdampf aufweisen.

Aus der EP 0906944 A2 sind lösemittelfreie Polyurethanklebstoffe bekannt, die Barriere-Eigenschaften gegenüber Sauerstoff und Feuchtigkeit aufweisen. Diese Polyurethanklebstoffe sind erhältlich durch Umsetzung eines linearen Diols mit einem linearen Polyester zu einem kristallinen Hydroxyl-terminierten Polyester, der mit einem flüssigen Diisocyanat bei einem NCO/OH-Verhältnis zwischen ca. 1 und ca. 1,1 umgesetzt wird. Die so erhaltenen Polyurethanklebstoffe werden als Laminierklebstoffe eingesetzt. Nachteilig ist, daß diese Art von Beschichtungsmitteln häufig nicht über die gewünschte Flexibilität verfügen. Nachteilig ist ferner, das lange Reaktionszeiten erforderlich sind, um hohe Barriere-Eigenschaften zu erzielen.

Die WO 02/26908 beschreibt Kaschierklebstoff-Zusammensetzungen auf Basis polymerer Bindemittel, insbesondere auf Basis ein- oder zweikomponentiger Polyurethanklebstoffe, die in der Bindemittelmatrix Füllkörper mit plättchenartiger Kristallitstruktur mit Aspektverhältnissen > 100 enthalten. Die Kaschierklebstoffe zeigen eine erhebliche Verminderung der Sauerstofftransmissionsrate. Die Füllkörper werden beispielsweise in die hydroxylgruppenhaltige Komponente des 2-Komponenten-Klebstoffes eindispergiert. Für einige Anwendungen kann die Viskosität zu hoch und/oder Aushärtegeschwindigkeit zu gering sein.

Der vorliegenden Erfindung liegt die Aufgabe zugrunde, die Verarbeitungs- und Gebrauchseigenschaften von Klebstoff-Zusammensetzungen mit Barriere-Eigenschaften zu verbessern. Eine weitere Aufgabe der Erfindung war die Bereitstellung von Klebstoff-Zusammensetzungen mit Barriere-Eigenschaften, insbesondere gegenüber CO₂, O₂, N₂, Wasserdampf und Aromastoffen, die bei niedrigen Temperaturen, das heißt bei ca. 30 °C bis ca. 160 °C, bevorzugt ca. 40 °C bis 120 °C, applizierbar sind und über eine gute Anfangshaftung aufweisen. Die Klebstoff-Zusammensetzungen sollen sich insbesondere als Kaschierklebstoffe für Lebensmittelverpackungen eignen.

Die erfindungsgemäße Lösung der Aufgabe ist den Patentansprüchen zu entnehmen. Sie besteht im wesentlichen aus einer Klebstoff-Zusammensetzung mit Barriere-Eigenschaften, enthaltend
a) eine Verbindung mit mindestens einer NCO-Gruppe und mindestens einer durch Bestrahlung härtbaren reaktiven funktionellen Gruppe als Komponente (A) und
b) einen nanoskaligen Füllstoff als Komponente (B).
   In einer besonders bevorzugten Ausführungsform der Erfindung enthält die Klebstoff-Zusammensetzung zusätzlich
c) eine Verbindung mit mindestens zwei funktionellen Gruppen mit jeweils mindestens einem aciden Wasserstoffatom als Komponente (C)
   und/oder
d) eine NCO-Gruppen freie Verbindung mit mindestens einer und bevorzugt zwei oder mehr durch Bestrahlung härtbaren reaktiven funktionellen Gruppe(n) als Komponente (D).

Die Verwendung der erfindungsgemäßen Klebstoff-Zusammensetzung mit Barriere-Eigenschaften gegenüber CO₂, O₂, N₂, Wasserdampf und Aromastoffen als Kaschierklebstoff verringert die Anzahl der Produktionsschritte zur Herstellung von Verbundfolien mit Barriere-Eigenschaften, da zusätzliche Beschichtungen mit Polyvinylidenchlorid und/ oder Ethylenvinylalkohol -Schichten oder das Bedampfen mit Aluminiumschichten zur Erzielung dieser Barriere-Eigenschaften nicht mehr erforderlich sind. Durch das Fehlen einer Metallschicht sind die Verbundfolien sortenreiner und damit leichter zu entsorgen

Die erfindungsgemässen Verbundfolien weisen eine verbesserte Chemikalienbeständigkeit und ein verbessertes E-Modul gegenüber vergleichbaren Verbundfolien aus dem Stand der Technik auf.

Die erfindungsgemässe Klebstoff-Zusammensetzung weist bei 70 °C eine Viskosität von 100 mPa.s bis 26 000 mPa.s (gemessen nach Brookfield, Digital Viscosimeter RVT DV-II, Spindel 27) auf und ist daher bei niedrigen Temperaturen, d. h. in einem Bereich von 40 °C bis 120 °C, gut applizierbar. Insbesondere weist sie schnell eine gute Anfangshaftung auf. Temperaturempfindliche Substrate, beispielsweise Polyolefinfolien, lassen sich mit der erfindungsgemäßen Klebstoff-Zusammensetzung ohne Schädigung des Substrats sicher verkleben.

Die erfindungsgemäße Klebstoff-Zusammensetzung ist strahlenhärtbar und wird als dual cure System eingesetzt. Dual cure Systeme zeichnen sich dadurch aus, daß sie sowohl strahlenhärtbar als auch durch einen zweiten, unabhängigen Härtungsmechanismus aushärtbar sind.

Die "Härtung" oder "Aushärtung" einer reaktive funktionelle Gruppen enthaltenden Zusammensetzung beruht in der Regel auf einer Polyreaktion, die mit einer Molekulargewichtserhöhung der in der Zusammensetzung enthaltenen Verbindungen einhergeht. Üblicherweise finden jedoch gleichzeitig auch noch Vernetzungsreaktionen statt.

Die Begriffe "Härtung", "Aushärtung" oder ähnliche Begriffe beziehen sich im Rahmen des vorliegenden Textes auf Polyreaktionen, wie sie innerhalb einzelner Komponenten der jeweils in Zusammenhang mit dem Begriff betrachteten Zusammensetzung ablaufen können. Bei der Polyreaktion kann es sich um eine radikalische, anionische oder kationische Polymerisation, Polykondensation oder Polyaddition handeln, bei der eine reaktive funktionelle Gruppe mit einer geeigneten weiteren funktionellen Gruppe unter Erhöhung des Molekulargewichts des sie tragenden Moleküls reagieren kann. Beispielsweise ist dies die strahleninduzierte Polymerisation einer Doppelbindungen tragenden Komponente. Die Begriffe beziehen sich ebenfalls auf Polyreaktionen, wie sie unter verschiedenen Komponenten der jeweils betrachteten Zusammensetzung ablaufen können, beispielsweise die Polyaddition einer Isocyanatgruppen tragenden Komponente mit einer OH-Gruppen tragenden Komponente. Die Begriffe beziehen sich weiterhin auf Polyreaktionen, wie sie zwischen einer Komponente der betrachteten Zusammensetzung und einer durch äußeren Einfluss in die Zusammensetzung gelangenden Komponente ablaufen können, beispielsweise die Reaktion zwischen Isocyanatgruppen und Luftfeuchtigkeit. Unter dem Merkmal "strahlenhärtbar" wird im Rahmen der vorliegenden Erfindung das Auslösen einer Polyreaktion unter Einfluss von Strahlung verstanden. Unter Strahlung soll hierbei jede Art von Strahlung verstanden werden, die in der zu bestrahlenden vernetzbaren Klebstoff-Schicht eine irreversible Vernetzung hervorruft. Geeignet sind besonders UV-, Elektronen-Strahlen, sichtbares Licht, aber auch IR-Strahlung.

Auf polymere Verbindungen bezogene Molekulargewichtsangaben beziehen sich, soweit nicht anders angegeben ist, auf das Zahlenmittel des Molekulargewichts (Mₙ). Alle Molekulargewichtsangaben beziehen sich, soweit nicht anders angegeben ist, auf Werte, wie sie durch Gelpermeationschromatographie (GPC) erhältlich sind.

Komponente (A) ist erhältlich durch Umsetzung von Polyisocyanaten mit Verbindungen, welche sowohl mindestens eine mit NCO-Gruppen reaktive Gruppe als auch mindestens eine durch Bestrahlung härtbare reaktive funktionelle Gruppe enthalten.

Geeignete Polyisocyanate sind aliphatische, aromatische und/oder alicyclische Isocyanate mit zwei oder mehr, bevorzugt zwei bis höchstens etwa vier, Isocyanatgruppen. Besonders bevorzugt werden im Rahmen der vorliegenden Erfindung monomere Polyisocyanate, insbesondere monomere Diisocyanate, eingesetzt. Beispiele für geeignete monomere Polyisocyanate sind: 1,5-Naphthylendiisocyanat, 2,2'-, 2,4- und/oder 4,4'-Diphenylmethandiisocyanat (MDI), hydriertes MDI (H₁₂MDI), Allophanate des MDI, Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylendiisocyanat, Phthalsäure-bis-isocyanato-ethylester, ferner Diisocyanate mit reaktionsfähigen Halogenatomen, wie 1-Chlormethylphenyl-2,4-diisocyanat, 1-Brommethylphenyl-2,6-diisocyanat,3,3-Bis-chlormethylether-4,4'-diphenyldiisocyanat oder schwefelhaltige Polyisocyanate.

Weitere einsetzbare Diisocyanate sind beispielsweise Trimethylhexamethylendiisocyanat, 1,4-Diisocyanatobutan, 1,12-Diisocyanatododecan und Dimerfettsäurediisocyanat. Besonders geeignet sind: Tetramethylen-, Hexamethylen, Undecan-, Dodecamethylen-, 2,2,4-Trimethylhexan-2,3,3-Trimethyl-hexamethylen, 1,3-Cyclohexan-, 1,4-Cyclohexan-, 1,3- bzw. 1,4-Tetramethylxylol-, Isophoron-, 4,4-Dicyclohexylmethan- und Lysinesterdiisocyanat.

In einer besonders bevorzugten Ausführungsform der Erfindung wird als Polyisocyanat das 1-Isocyanatomethyl-3-isocyanato-1,5,5-trimethylcyclohexan (IPDI), Tetramethylxylylendiisocyanat (TMXDI), 2,2'-, 2,4- und/oder 4,4'-Diphenylmethandiisocyanat (MDI) oder Gemische daraus, eingesetzt. Beim MDI wird bevorzugt 4,4'-MDI und/oder 2,4'-MDI mit einer Reinheit > 97 % eingesetzt.

In einer besonderen Ausführungsform werden Gemische von Polyisocyanaten eingesetzt, wobei in dem Gemisch mindestens ein Polyisocyanat mit Uretdion-, Isocyanurat-, Allophanat-, Biuret-, Iminooxathizindion- und/oder Oxadiazintrionstruktur enthalten ist.

Besonders bevorzugt sind Polyisocyanate bzw. Polyisocyanatgemische mit Allophanatstruktur auf Basis von HDI, IPDI und/oder 2,4'- oder 4,4'-Diisocyanatodicyclohexylmethan. Oxadiazintriongruppen enthaltene Polyisocyanate sind aus Diisocyanat und Kohlendioxid herstellbar.

Als mindestens trifunktionelle Isocyanate geeignet sind Polyisocyanate, die durch Trimerisation oder Oligomerisation von Diisocyanaten oder durch Reaktion von Diisocyanaten mit polyfunktionellen hydroxyl- oder aminogruppenhattigen Verbindungen entstehen.

Zur Herstellung von Trimeren geeignete Isocyanate sind die bereits oben genannten Diisocyanate, wobei die Trimerisierungsprodukte der Isocyanate HDI, MDI, TDI oder IPDI besonders bevorzugt sind.

Weiterhin sind als Triisocyanate auch Addukte aus Diisocyanaten und niedermolekularen Triolen geeignet, insbesondere die Addukte aus aromatischen Diisocyanaten und Triolen wie zum Beispiel Trimethylolpropan oder Glycerin. Ebenfalls zum Einsatz geeignet sind die polymeren Isocyanate, wie sie beispielsweise als Rückstand im Destillationssumpf bei der Destillation von Diisocyanaten anfallen. Besonders geeignet ist hierbei das polymere MDI, wie es bei der Destillation von MDI aus dem Destillationsrückstand erhältlich ist.

In einer bevorzugten Ausführungsform der Erfindung werden als Polyisocyanate monomere Polyisocyanate aus der Gruppe 1,5-Naphthylendiisocyanat, 2,2'-, 2,4- und/oder 4,4'-Diphenylmethandiisocyanat (MDI), die Isomeren des Toluylendiisocyanats (TDI), 1-isocyanatomethyl-3-isocyanato-1,5,5-trimethylcyclohexan (IPDI), Hexan-1,6-diisocyanat (HDI) Tetramethylxylylendiisocyanat (TMXDI), Trimerisierungsprodukte der Isocyanate HDI, MDI, TDI oder IPDI; und NCO-terminierte Polyurethan-Prepolymere auf Basis HDI, MDI, TDI oder IPDI; sowie Gemische daraus, eingesetzt.

Insbesondere bevorzugt werden im Rahmen der Erfindung Polyurethan-Prepolymere mit freien NCO-Gruppen, insbesondere sogenannte "NCO-terminierte Polyurethan-Prepolymere" als Polyisocyanate eingesetzt. Polyurethan-Prepolymere mit freien NCO-Gruppen sind durch Umsetzung von Polyolen mit monomeren Polyisocyanaten erhältlich, wobei das monomere Polyisocyanat im Überschuß eingesetzt wird.

Unter einem Polyol wird ein polyfunktioneller Alkohol verstanden, d.h. eine Verbindung mit mehr als einer OH-Gruppe im Molekül. Daneben kann das Polyol weitere funktionelle Gruppen enthalten, beispielsweise Sulfogruppen.

Es kann eine Vielzahl von Polyolen eingesetzt werden. Beispielsweise sind dies aliphatische Polyole mit 2 bis 4 OH-Gruppen pro Molekül. Die OH-Gruppen können sowohl primär als auch sekundär gebunden sein. Zu den geeigneten aliphatischen Polyolen zählen beispielsweise Ethylenglykol, Propandiol-1,2, Propandiol-1,3, Butandiol-1,4, Butandiol-1,3, Butandiol-2,3, Butendiol-1,4, Butindiol-1,4, Pentandiol-1,5, sowie die isomeren Pentandiole, Pentendiole oder Pentindiole oder Gemische aus zwei oder mehr davon, Hexandiol-1,6, sowie die isomeren Hexandiole, Hexendiole oder Hexindiole oder Gemische aus zwei oder mehr davon, Heptandiol-1,7 sowie die isomeren Heptan-, Hepten- oder Heptindiole, Octandiol-1,8 sowie die isomeren Octan-, Octen- oder Octindiole, und die höheren Homologen oder isomeren der genannten Verbindung, wie sie sich für den Fachmann aus einer schrittweisen Verlängerung der Kohlenwasserstoffkette um jeweils eine CH₂-Gruppe oder unter Einführung von Verzweigungen in die Kohlenstoffkette ergeben, oder Gemische, aus zwei oder mehr davon.

Ebenfalls geeignet sind höherfunktionelle Alkohole wie beispielsweise Glycerin, Trimethylolpropan, Pentaerythrit oder Zuckeralkohole wie Sorbit oder Glucose, sowie oligomere Ether der genannten Substanzen mit sich selbst oder im Gemisch aus zwei oder mehr der genannten Verbindungen untereinander, beispielsweise Polyglycerin mit einem Polymerisationsgrad von etwa 2 bis etwa 4.

Bei den Polyolen sind Polyesterpolyole, Polyetherpolyole, Polyetherpolyole, die durch Vinylpolymere modifiziert wurden, Polyesterpolyetherpolyole, Polcaprolactonpolyole oder Polytetramethylenpolyole von besonderer Bedeutung. Beispielsweise erhält man Polyesterpolyole im allgemeinen durch Umsetzung mehrfunktioneller Alkohole mit mehrfunktionellen Carbonsäuren.

Weiterhin können als Polyol Polyetherpolyole eingesetzt werden. Polyetherpolyole werden vorzugsweise durch Umsetzung von niedermolekularen Polyolen mit Alkylenoxiden erhalten. Die Alkylenoxide weisen vorzugsweise zwei bis etwa vier C-Atome auf. Geeignet sind beispielsweise die Umsetzungsprodukte von Ethylenglykol, Propylenglykol, den isomeren Butandiolen oder Hexandiolen, wie oben genannt, oder Gemischen aus zwei oder mehr davon, mit Ethylenoxid, Propylenoxid oder Butylenoxid oder Gemischen aus zwei oder mehr davon. Ferner sind auch die Umsetzungsprodukte polyfunktioneller Alkohole wie Glycerin, Trimethylolethan oder Trimethylolpropan, Pentaerythrit oder Zuckeralkohole oder Gemischen aus zwei oder mehr davon, mit den genannten Alkylenoxiden zu Polyetherpolyolen geeignet.

Im Sinne der Erfindung werden Polyurethan-Prepolymere mit freien NCO-Gruppen auf Basis von Polyesterpolyolen oder Polyetherpolyolen bevorzugt. Im Rahmen der vorliegenden Erfindung ist zum Einsatz als Polyol besonders geeignet ein Polyetherpolyol und/oder Polyesterpolyol mit einer molaren Masse von 200 bis 10000, bevorzugt von 200 bis 6000 g/mol, insbesondere bevorzugt 200 bis 4000 g/mol, oder ein Gemisch von Polyetherpolyolen und/oder Polyesterpolyolen, die das einschränkende Kriterium der molaren Masse erfüllen. Weitere Hinweise zu dem breiten Spektrum an geeigneten Polyol- und Isocyanatkomponenten, ggf. einsetzbarer Kettenverlängerer, sowie Verfahren zur Herstellung von Polyurethan-Prepolymeren kann der Fachmann der einschlägigen Fach- und Patentliteratur zu Polyurethan-Prepolymeren entnehmen, beispielsweise der EP 150444, EP 0 590 398 A1 oder WO 99/24486.

Zur Herstellung der organische Verbindung (A) wird bevorzugt ein monomerenarmes Polyurethan-Prepolymer eingesetzt, wobei im Rahmen der vorliegenden Erfindung unter "monomerenarm" eine niedrige Konzentration der monomeren Diisocyanate im PU-Prepolymeren mit freien NCO-Gruppen zu verstehen ist. Die Konzentration dieser sogenannten "Restmonomere" liegt unter einem, vorzugsweise zwischen 0 und 0,5 Gew.-%, besonders bevorzugt zwischen 0 und 0,1 Gew.-%, bezogen auf die Zusammensetzung des PU-Prepolymeren mit freien NCO-Gruppen. Insbesondere bevorzugt werden PU-Prepolymere mit freien NCO-Gruppen und einem Gehalt an monomeren TDI von kleiner 0,1 Gew.-% eingesetzt.

Monomerarme PU-Prepolymere mit freien NCO-Gruppen sind beispielsweise aus der DE 4136490, der WO 01/40342 sowie der WO-97/46603 bekannt und ausdrücklich Gegenstand dieser Erfindung.

Um Komponente (A) zu erhalten, werden die Polyisocyanate mit Verbindungen, welche sowohl mindestens eine mit NCO-Gruppen reaktive funktionelle Gruppe als auch mindestens eine durch Bestrahlung härtbare reaktive funktionelle Gruppe enthalten, umgesetzt.

Die mit einer NCO-Gruppe reaktive funktionelle Gruppe ist eine Gruppe, die ein nach dem Zerewittinoff Test bestimmbäres, an ein N-, O- oder S-Atom gebundenes, aktives Wasserstoffatom aufweist. Hierunter fallen insbesondere die Wasserstoffatome von Wasser, Carboxy-, Amin-, Imino-, Hydroxy-, und Thiolgruppen.

Eine durch Bestrahlung härtbare reaktive funktionelle Gruppe ist beispielsweise eine Gruppe mit einer Kohlenstoff-Kohlenstoff-Doppelbindung.

Einsetzbare Verbindungen sind beispielsweise Polyacrylate, Polyester, Polyether, Polycarbonate, Polyacetale, Polyurethane, Polyolefine, oder Kautschukpolymere wie Nitril- oder Styrol/Butadien-Kautschuk, sofern sie mindestens eine durch Bestrahlung bevorzugt mit UV-Licht oder mit Elektronenstrahlen reaktive funktionelle Gruppe und mindestens ein acides Wasserstoffatom aufweisen.

In der bevorzugten Ausführungsform enthält die als Komponente (A) eingesetzte Verbindung mindestens eine freie NCO-Gruppe als auch mindestens eine (Meth)acrylgruppe.

Vorzugsweise werden zur Herstellung von Komponente (A) Derivate der Acrylsäure, beispielsweise die Acrylate und die Methacrylate, zur Reaktion mit dem Polyisocyanat eingesetzt.

Einsetzbare Verbindungen sind Poly(meth)acrylate, Polyester(meth)acrylate, Epoxy(meth)acrylate oder Polyurethan(meth)acrylate.

"(Meth)acrylat" soll im folgenden Text eine verkürzte Schreibweise für "Acrylat und/oder Methacrylat" bedeuten.

Bevorzugt ist Komponente (A) ein Reaktionsprodukt von mindestens einem Polyisocyanat mit mindestens einem (Meth)acrylat der allgemeinen Formel (I)

H₂C=CR¹-C(=O)-O-R²-Y (I)

mit :
- Y =: eine gegenüber NCO-Gruppen reaktive Gruppe, bevorzugt OH, COOH, SH, NH₂, NHR³;
- R¹ =: H, CH₃;
- R² =: gesättigte oder ungesättigte lineare oder verzweigte Alkylengruppe mit 2 bis 21 Kohlenstoffatomen, gel, mit funktionellen Gruppen, beispielsweise mit einer Phenoxy- oder Acetoxygruppe, substituiert; bevorzugt 2 bis 6 Kohlenstoffatomen, insbesondere eine Ethylen-, Propylen-, Isopropylen-, n-Butylen-, Isobutylen-Gruppe, oder eine C2-C4-Alkylenoxid-Gruppe, bevorzugt eine Ethylenoxid- und/oder Propylenoxidgruppe, insbesondere bevorzugt eine Ethylenoxidgruppe mit 2 bis 10 Ethylenoxideinheiten und/oder eine Propylenoxidgruppe mit 1 bis 7 Propylenoxideinheiten.
- R³ =: linearer oder verzweigter, gesättigter oder ungesättigter C₁-C₁₈-Alkylrest; C₅-C₈-Cycloalkyl, C₆-C₁₀-Aryl, C₇-C₁₂-Aralkyl;

Die Herstellung derartiger (Meth)acrylate (I) ist dem Fachmann bekannt.

Bevorzugt werden als (Meth)acrylate (II) Hydroxy(meth)acrylate (Y=OH) eingesetzt, beispielsweise: 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 6-Hydroxyhexylacrylat, 6-Hydroxyhexylmethacrylat, Polyethylenglykolacrylat, Polyethylenglykolmethacrylat, Polypropylenglykolacrylat und Polypropylenglykolmethacrylat, Glycerinmono(meth)acrylat, 1,3-Glycerindi(meth)acrylat, 3-Phenoxy-2-hydroxypropyl-(meth)acrylat, 3-Toluyloxy-2-hydroxypropyl(meth)acrylat, 3-Acetoxy-2-hydroxypropyl(meth)acrylat, 2-Hydroxy-3-[(2-methyl-1-oxo-2-propenyl)oxy]propylester der 4-Hydroxy-Benzoesäure, 2-Hydroxybutyl-(meth)acrylat, 3-Hydroxybutyl(meth)acrylat, 4-Hydroxybutyl(meth)acrylat, 6-Hydroxyhexyl(meth)acrylat.

Die Hydroxy-Acrylate oder -Methacrylate werden dabei einzeln oder im Gemisch eingesetzt.

Die Mengen an Polyisocyanat und (Meth)acrylat der allgemeinen Formel (I) können in einem breiten Bereich ausgewählt werden. So kann das Verhältnis NCO-Gruppe des Polyisocyanats zur gegenüber NCO-Gruppen reaktiven Gruppe Y des (Meth)acrylats der allgemeinen Formel (I) zwischen 0,6:1 bis 20:1 liegen.

Bevorzugt beträgt das Verhältnis NCO:Y 1,2:1 bis 10:1

Die molare Masse von Komponente (A) liegt zwischen 100 g/mol und 10000 g/mol, bevorzugt zwischen 110 g/mol und 6000 g/mol und insbesondere bevorzugt zwischen 120 g/mol und 4000 g/mol. Der NCO-Wert von Komponente (A) liegt zwischen 2 Gew.-% und 30 Gew.-%, bevorzugt zwischen 4 Gew.-% und 25 Gew.-% und insbesondere bevorzugt zwischen 6 Gew.-% und 20 Gew.-% (bestimmt nach Spiegelberger). Komponente (A) ist von 5 bis 98 Gew.-%, bevorzugt von 20 bis 97,5 Gew.-% und insbesondere von 40 bis 95 Gew.-%, bezogen auf die Gesamtmenge der Klebstoff-Zusammensetzung, im erfindungsgemässen Klebstoff enthalten.

Als Komponente (B) ist in der erfindungsgemässen Klebstoff-Zusammensetzung mindestens ein nanoskaligen Füllstoff enthalten.

Nanoskalige Füllstoffe werden auch als nanodisperse Füllstoffe oder "NanoPartikel" bezeichnet, da dessen kleinste, in der Dispersion eine starre Einheit bildenden Partikel im zahlengewichteten Mittel aller Partikel in wenigstens einer, für jedes Partikel beliebig wählbaren Richtung eine Ausdehnung von nicht mehr als 1000 Nanometer (nm), bevorzugt nicht mehr als 500 nm und insbesondere bevorzugt nicht mehr als 100 nm aufweisen.

Die Nanopartikel besitzen beispielsweise eine kugelartige, stäbchenartige, plättchenartige Struktur oder stellen Gemische aus verschiedenen Strukturen dar. Die im nanoskaligen Füllstoff enthaltenen Nanopartikel weisen bevorzugt im zahlengewichteten Mittel Grössen im Bereich von 1 bis 40 nm, besonders bevorzugt zwischen 3 und 30 nm auf. Die Partikelgröße wird dabei bevorzugt nach der UPA-Methode (Ultrafine Particle Analyzer) bestimmt, zum Beispiel nach dem Laser-Streulicht-Verfahren ("Laser Light Back Scattering"). Um eine Agglomeration oder ein Zusammenwachsen der Nanopartikel zu verhindern oder zu vermeiden, können diese üblicherweise oberflächenmodifiziert bzw. oberflächenbeschichtet sein. Ein derartiges Verfahren zur Herstellung agglomeratfreier Nanopartikel ist am Beispiel von Eisenoxidteilchen in der DE-A-19614136 in den Spalten 8 bis 10 angegeben. Einige Möglichkeiten zur oberflächlichen Beschichtung derartiger Nanopartikel zur Vermeidung einer Agglomeration sind in der DE-A-19726282 angegeben.

In einer bevorzugten Ausführungsform der Erfindung werden nanoskalige Füllstoffe eingesetzt, deren kleinste in der Dispersion eine starre Einheit bildenden Bestandteile in zwei senkrecht zueinander stehenden, beliebig wählbaren, Richtungen jeweils eine Ausdehnung von wenigstens dem Zehnfachen der Grösseder Bestandteile in der Richtung mit der geringsten Ausdehnung des Bestandteils aufweisen. Die Dicke dieser Partikel ist bevorzugt kleiner als 10 nm.

Der nanoskalige Füllstoff wird ausgewählt aus der Gruppe:

Oxide, Nitride, Halogenide, Sulfide, Carbide, Telluride, Selenide der zweiten bis vierten Hauptgruppe, der Übergangselemente oder der Lanthanide, insbesondere Oxide, Hydroxide, Nitride, Halogenide, Carbide oder gemischte Oxid-/Hydroxid-/Halogenit-Verbindungen des Aluminums, Siliciums, Zirkoniums, Titans, Zinns, Zinks, Eisens oder der (Erd)Alkalymetalle. Hierbei handelt es sich im wesentlichen um Tonerden, zum Beispiel Aluminiumoxide, Boehmit, Bayerit, Gibbsit, Diaspor und ähnliche. Geeignet sind Schichtsilikate wie beispielsweise Bentonit, Montmorillonit, Hydrotalcit, Hectorit, Kaolinit, Boehmit, Glimmer, Vermiculit oder deren Mischungen. Besonders bevorzugt werden Phyllosilikate, wie Magnesiumsilikat oder Alluminiumsilikat, sowie Montmorillonit, Saponit, Beidellit, Nontronit, Hectorit, Stevensit, Vermiculit, Halloysit oder deren synthetische Analoga eingesetzt. Von den Modifikationen Cristobalit, Quarz und Tridynit des Siliciumdioxids wird die Quarz-Modifikation bevorzugt.

Desweiteren sind Magnesiumoxid, Aluminiumoxid, Magnesiumfluorid, Cadmiumsulfid, Zinksulfid, Cadmiumselenid u. ä. als nanoskale Füllkörper geeignet.

Durch den Aufbau labyrinthartiger Strukturen der nanoskalige Füllkörper in der Klebstoffmatrix wird der Difusionsweg von niedrigmolekularen Verbindungen wie z.B. Sauerstoff, Wasser, Kohlendioxid, Aroma- und/oder Geschmacksstoffen derartig verlängert, daß ihre Wanderung durch die Klebstoffschicht drastig verändert wird oder im Idealfall sogar vollkommen unterbunden wird.

Der nanoskalige Füllstoff ist als Komponente (B) zu 2 bis 30 Gew.-%, bevorzugt 2,5 bis 20 Gew.-% und insbesondere bevorzugt zu 5 bis 15 Gew.-%, bezogen auf die Gesamtmenge der Klebstoff-Zusammensetzung, im erfindungsgemässen Klebstoff enthalten.

In einer besonders bevorzugten Ausführungsform der Erfindung enthält die Klebstoff-Zusammensetzung mindestens eine Verbindung mit mindestens zwei funktionellen Gruppen mit jeweils mindestens einem aciden Wasserstoffatom als Komponente (C) und/oder mindestens eine NCO-Gruppen freie Verbindung mit mindestens einer und bevorzugt zwei oder mehr durch Bestrahlung härtbaren reaktiven funktionellen Gruppe(n) als Komponente (D).

Sowohl Komponente (C) als auch Komponente (D) können in dieser Ausführungsform eine Doppelfunktion ausüben. Beide dienen dann einerseits als bevorzugtes Dispersionsmedium des nanoskaligen Füllstoffes und andererseits als Härter (= Komponente (C)) oder Reaktiwerdünner (= Komponente (D)). Bevorzugt ist der nanoskalige Füllstoff in Komponente (C) und/oder Komponente (D) enthalten. Insbesondere bevorzugt ist der nanoskalige Füllstoff in Komponente (D) enthalten.

Die Form der Reaktivität ermöglicht es, die erfindungsgemässe Klebstoff-Zusammensetzung mit Barriere-Eigenschaften in verarbeitbarem Zustand (in der Regel flüssig bis hochviskos) in der gewünschten Art an den gewünschten Ort zu bringen und durch die Zugabe von mindestens einer Verbindung mit mindestens zwei funktionellen Gruppen mit jeweils mindestens einem aciden Wasserstoffatom als Komponente (C), beispielsweise Wasser oder anderen Verbindungen, die über ein acides Wasserstoffatom verfügen, zu härten.

Im Rahmen der vorliegenden Erfindung wird daher Komponente (C) auch als Härter bezeichnet.

Bei diesen sogenannten 2K-Systemen erfolgt die Zugabe des Härters in der Regel unmittelbar vor der Applikation, wobei dem Verarbeiter nach der Härterzugabe nur noch eine begrenzte Verarbeitungszeit zur Verfügung steht.

Es ist jedoch ebenfalls möglich, die erfindungsgemässe Klebstoff-Zusammensetzung mit den reaktiven NCO-Gruppen ohne Zugabe von Härtern alleine durch die Reaktion mit Luftfeuchtigkeit auszuhärten (1K-Systeme). Solche 1 K-Systeme weisen gegenüber den 2K-Systemen in der Regel den Vorteil auf, daß für den Anwender das oft lästige Mischen der häufig viskosen Komponenten vor der Applikation entfällt.

Wenn jedoch ein schnelles Erreichen einer bestimmten Endfestigkeit, d.h., eine hohe Härtungsgeschwindigkeit gefordert ist, beispielsweise um eine möglichst zügige Weiterverarbeitung der verklebten, Materialien zu ermöglichen, kann die auf Härtung durch Luftfeuchtigkeit beruhende Härtungsgeschwindigkeit zu gering sein. In solchen Fällen werden 2K-Systeme bevorzugt und dem Klebstoff wird vor der Verarbeitung Komponente (C) als Härter zugesetzt.

Gegenstand der Erfindung ist daher eine Klebstoff-Zusammensetzung mit Barriere-Eigenschaften, welche in Form eines 2K-Systems als Härter (C) 0 bis 90 Gew.-%, bevorzugt 5 bis 60 Gew.-% einer Verbindung mit mindestens zwei funktionellen Gruppen mit jeweils mindestens einem aciden Wasserstoffatom enthält.

Die molare Masse von (C) liegt in einem Bereich von 50 bis 10 000 g/mol, bevorzugt 50 bis 6 000 g/mol und insbesondere bevorzugt in einem Bereich von 50 bis 3000 g/mol.

Als Härter (C) wird vorzugsweise eine Verbindung mit mindestens zwei funktionellen Gruppen mit jeweils mindestens einem aciden Wasserstoffatom, oder ein Gemisch aus zwei oder mehr solcher Verbindungen, eingesetzt, die mit den NCO-Gruppen von (A) reagieren können.

Als mit den entsprechenden NCO-Gruppen von (A) reaktionsfähige funktionelle Gruppen mit mindestens einem aciden Wasserstoffatom eignen sich insbesondere primäre oder sekundäre Aminogruppen, Mercaptogruppen oder OH-Gruppen. Die als Härter (C) einsetzbaren Verbindungen können Aminogruppen, Mercaptogruppen oder OH-Gruppen jeweils ausschließlich, oder im Gemisch aufweisen.

Die Funktionalität der im Härter (C) einsetzbaren Verbindungen beträgt in der Regel mindestens etwa zwei. Vorzugsweise weist der Härter (C) einen Anteil an höherfunktionellen Verbindungen, beispielsweise mit einer Funktionalität von drei, vier oder mehr, auf. Die gesamte (durchschnittliche) Funktionalität des Härters (C) beträgt beispielsweise etwa zwei (z. B. wenn nur difunktionelle Verbindungen als Härter (C) eingesetzt werden), oder mehr, beispielsweise etwa 2,1, 2,2, 2,5, 2,7, oder 3. Gegebenenfalls kann der Härter (C) eine noch höhere Funktionalität aufweisen, beispielsweise etwa vier oder mehr. Vorzugsweise enthält der Härter (C) ein mindestens zwei OH-Gruppen tragendes Polyol. Zum Einsatz als Härter (C) sind entsprechende, im vorliegenden Text bereits beschriebene Polyole geeignet.

Der Härter (C) wird in der Regel in einer Menge eingesetzt, dass das Verhältnis von mit dem Härter (C) reaktionsfähigen funktionellen Gruppen der Verbindungen (A) zu mit entsprechenden funktionellen Gruppen der Verbindungen (A)-reaktionsfähigen Gruppen des Härters (C) etwa 5:1 bis etwa 1:1, insbesondere etwa 2:1 bis etwa 1:1 beträgt.

In einer weiteren bevorzugten Ausführungsform der Erfindung enthält die Klebstoff-Zusammensetzung mindestens eine NCO-Gruppen freie Verbindung mit mindestens einer und bevorzugt zwei oder mehr durch Bestrahlung härtbaren reaktiven funktionellen Gruppe(n) als Komponente (D).

Als durch Bestrahlung mit UV-Licht oder mit Elektronenstrahlen polymerisierbare funktionelle Gruppen weist Verbindung (D) mindestens eine Gruppe mit olefinisch ungesättigter Doppelbindung auf.

Als Verbindung (D) sind besonders di- oder höherfunktionelle Acrylat- oder Methacrylatester geeignet. Solche Acrylat- oder Methacrylatester umfassen beispielsweise Ester der Acrylsäure oder Methacrylsäure mit aromatischen, aliphatischen oder cycloaliphatischen Polyolen oder Acrylatester von Polyetheralkoholen.

(Meth)acrylatester aliphatischer Polyole mit 2 bis etwa 40 Kohlenstoffatomen umfassen beispielsweise Neopentylglykoldi(meth)acrylat, 1,6-Hexandioldi(meth)acrylat, Trimethylolpropantri(meth)acrylat, Pentaerythrittetra(meth)acrylat, Allyl(meth)acrylat, 2,3-Isopropyliden-Glycerin(meth)acrylat, 2-Acetamidoethyl-(meth)acrylat, 2-Benzamidoethyl-(meth)acrylat, Benzyl(meth)acrylat, Phenylethyl(meth)acrylat, 2-Phenoxyethyl-(meth)acrylat, Umsetzungsprodukt aus Methyloxazolin und Methacrylsäure, Morpholinoethyl(meth)acrylat, Glycidyl(meth)acrylat, Piperidylacrylamid, Neopentyl(meth)acrylat, Cyclohexyl(meth)acrylat, tert.-Butylmethacrylat und Tetrahydrofurfuryl(meth)acrylat, TEGDMA (Tetraethylenglycol-Dimethacrylat), TEDMA (Triethylenglycol-Dimethacrylat), Bisphenol-A-bis(hydroxypropylmethacrylat sowie (Meth)acrylatester des Sorbits und anderer Zuckeralkohole. Diese (Meth)acrylatester von aliphatischen oder cycloaliphatischen Diolen können mit einem aliphatischen Ester oder einem Alkylenoxid modifiziert werden. Die durch einen aliphatischen Ester modifizierten Acrylate umfassen beispielsweise Neopentylglykolhydroxypivalatdi(meth)acrylat, Caprolacton-modifizierte Neopentylglykolhydroxypivalatdi(meth)acrylate und dergleichen. Die Alkylenoxidmodifizierten Acrylatverbindungen umfassen beispielsweise Ethylenoxid-mödifizierte Neopentylglykoldi(meth)acrylate, Propylenoxid-modifizierte Neopentylglykoldi(meth)acrylate, Ethylenoxid-modifizierte 1,6-(Hexandioldi(meth)acrylate oder Propylenoxid-modifizierte 1,6-Hexandioldi(meth)acrylate oder Gemische aus zwei oder mehr davon.

Auf Polyetherpolyolen aufgebaute (Meth)acrylatmonomere umfassen beispielsweise Neopentylglykol-modifizierte (Meth)acrylate, Trimethylolpropandi(meth)acrylate, Polyethylenglykoldi(meth)acrylate, Polypropylenglykoldi(meth)acrylate und dergleichen. Tri- und höherfunktionelle Acrylatmonomere umfassen beispielsweise Trimethylolpropantri(meth)acrylat, Pentaerythritoltri- und tetra(meth)acrylat, Dipentaerythritoltetra(meth)acrylat, Dipentaerytrhitolpenta(meth)acrylat, Dipentaerythritolhexa(meth)acrylat, Caprolacton-modifiziertes Dipentaerythritolhexa(meth)acrylat, Pentaerythritoltetra(meth)acrylat, Tris[(meth)acryloxyethyl]isocyanurat, Caprolacton-modifizierte Tris[(meth)acryloxyethyl]isocyanurate oder Trimethylolpropantetra(meth)acrylat oder Gemische aus zwei oder mehr davon.

Unter den genannten Di-, Tri- oder höherfunktionellen (Meth)acrylatmonomeren, die erfindungsgemäß als Komponente (D) einsetzbar sind, sind Di-, Tri- und Tetrapropylenglykoldiacrylat, Neopentylglykolpropoxylatdi(meth)acrylat, Trimethylolpropantri(meth)acrylat, Trimethylolpropanmonethoxytri(meth)acrylat und Pentaerythritoltriacrylat bevorzugt.

Meth)Acrylatester auf Basis urethangruppenhaltiger Polyole lassen sich herstellen, indem die Polyole mit Polyisocyanaten umgesetzt werden, so daß zumindest partiell OH-terminierte Polyurethan-Prepolymere entstehen, die mit (Meth)Acrylsäure zu den entsprechenden Mono- oder Diestern verestert werden.

Als sogenannter "Reaktivverdünner" sind als Verbindung (D) besonders solche Verbindungen (D1) geeignet, die bei Raumtemperatur fließfähig sind, insbesondere Ester der Acrylsäure oder Methacrylsäure. Besonders geeignete Verbindungen (D1) sind beispielsweise die Acrylsäure- oder Methacrylsäureester der aromatischen, cycloaliphatischen, aliphatischen, linearen oder verzweigten C₄₋₂₀-Monoalkohole oder von entsprechenden Etheralkoholen, beispielsweise n-Butylacrylat, 2-Ethylhexylacrylat, Octyl-/Decylacrylat, Isobornylacrylat, 3-Methoxybutylacrylat, 2-Phenoxyethylacrylat, Benzylacrylat oder 2-Methoxypropylacrylat. Die molare Masse der Verbindung (D) liegt im Bereich von 100 bis 15 000 g/mol, bevorzugt von 100 bis 10 000 g/mol und besonders bevorzugt von 100 bis 8000 g/mol. Die molare Masse der Verbindung (D1) liegt im Bereich von 50 bis 6000 g/mol, bevorzugt von 80 bis 4000 g/mol und besonders bevorzugt von 100 bis 2000 g/mol.

Wird Verbindung (D) verwendet, so stellt sie in der erfindungsgemässen strahlenhärtbaren Klebstoff-Zusammensetzung mit Barriere-Eigenschaften einen Anteil von bis zu etwa 80 Gew.-%, vorzugsweise jedoch darunter, beispielsweise etwa 40 Gew.-%, 30 Gew.-% oder etwa 20 Gew.-%. Die Verwendung geringerer Mengen ist ebenso möglich, so kann die erfindungsgemässe strahlenhärtbare Klebstoff-Zusammensetzung mit Barriere-Eigenschaften auch nur 10 Gew.-% oder eine Menge von etwa 0,5 bis etwa 8 Gew.% an Verbindung (D) enthalten.

Die erfindungsgemäßen Klebstoff-Zusammensetzungen mit Barriere-Eigenschaften sind hochreaktive mehrstufig härtende Klebstoffe.

In einer ersten Stufe wird der Klebstoff durch Bestrahlung einer schnellen, ersten Härtungsreaktion unterzogen, so dass eine problemlose Handhabung der verklebten, Gegenstände oder Materialien ermöglicht wird. In einer zweiten Härtungsstufe härtet der Klebstoff dann weiter aus, bis es die gewünschte Endfestigkeit erreicht hat. Diese prinzipielle Methodik ist beispielsweise in der DE 40 41 753 A 1 beschrieben.

Die Bestrahlung in der ersten Stufe kann durch UV-, Elektronen-Strahlen, sichtbares Licht, aber auch IR-Strahlung erfolgen. Bei Elektronen- oder UV-Bestrahlung werden die gewünschten Produkteigenschaften über die Strahlendosis eingestellt, bei IR-Strahlung über die Produkttemperatur und die Verweilzeit. Der Ablauf der photochemischen Härtung kann IR-spektroskopisch untersucht werden (Intensität und Relation der C=C und C=O Banden).

Im Rahmen der Erfindung ist die Bestrahlung mit UV-Licht oder mit Elektronenstrahlen bevorzugt.

Für den Fall, dass die erfindungsgemäße strahlenhärtbare Klebstoff-Zusammensetzung mit Barriere-Eigenschaften unter UV-Bestrahlung polymerisiert werden soll, ist in der Klebstoff-Zusammensetzung mindestens ein Photoinitiator (E) enthalten.

Bevorzugt wird ein Photoinitiator (E) eingesetzt, der bei Bestrahlung mit Licht einer Wellenlänge von etwa 215 bis etwa 480 nm dazu in der Lage ist, eine radikalische Polymerisation olefinisch ungesättigter Doppelbindungen zu initiieren. Im Rahmen der vorliegenden Erfindung sind zum Einsatz als Photoinitiator (E) grundsätzlich alle handelsüblichen Photoinitiatoren geeignet, die mit dem erfindungsgemäßen Bindemittel kompatibel sind, d. h. wenigstens weitgehend homogene Gemische ergeben.

Beispielsweise sind dies alle Norrish-Type I fragmentierenden Substanzen. Beispiele hierfür sind Benzophenon, Campherchinon, Quantacure (Hersteller: International Bio-Synthetics), Kayacure MBP (Hersteller Nippon Kayaku), Esacure BO (Hersteller: Fratelli Lamberti), Trigonal 14 (Hersteller: Akzo), Photoinitiatoren der Irgacure^{®}-, Darocure^{®}- oder Speedcure^{®}-Reihe (Hersteller: Ciba-Geigy), Darocure^{®} 1173 und/oder Fi-4 (Hersteller: Eastman). Insbesondere geeignet sind darunter Irgacure^{®} 651, Irgacure^{®} 369, Irgacure^{®} 184, Irgacur^{®} 907, Irgacure^{®} 1850, Irgacure^{®} 1173 (Darocure^{®} 1173), Irgacure^{®} 1116, Speedcure^{®} EDB, Speedcur^{®} ITX, Irgäcure^{®} 784 oder Irgacure^{®} 2959 oder Gemische aus zwei oder mehr davon. Weiterhin geeignet ist 2,4,6-Trimethylbenzoldiphenylphosphinoxid (Lucirin TPO, Hersteller: BASF AG), das auch im Gemisch mit einem oder mehreren der oben genannten Photoinitiatoren eingesetzt werden kann.

Die erfindungsgemäße Klebstoff-Zusammensetzung mit Barriere-Eigenschaften enthält den Photoinitiator (E) in einer Menge von 0 bis 15 Gew.-%, bevorzugt, 0,5 bis 10 Gew.-% insbesondere bevorzugt 1 bis 5 Gew.-%, bezogen auf die Gesamtmenge der Klebstoff-Zusammensetzung.

Gegebenenfalls kann die erfindungsgemässe Klebstoff-Zusammensetzung Zusatzstoffe (F) enthalten, die am gesamten Bindemittel einen Anteil von bis zu etwa 50 Gew.-% haben können.

Zu den im Rahmen der vorliegenden Erfindung einsetzbaren Zusatzstoffen (F) zählen beispielsweise Weichmacher, Stabilisatoren, Antioxidantien, Farbstoffe oder Füllstoffe.

Als Weichmacher (F1) werden beispielsweise Weichmacher auf Basis von Phthalsäure eingesetzt, insbesondere Dialkylphthalate, wobei als Weichmacher Phthalsäureester bevorzugt sind, die mit einem etwa 6 bis etwa 14 Kohlenstoffatomen aufweisenden Alkanol verestert wurden. Besonders bevorzugt sind hierbei Di-isononyl- oder Di-iso-Tridecyl-phthalat.

Ebenfalls als Weichmacher geeignet sind Benzoatweichmacher, beispielsweise Sucrosebenzoat, Diethylenglykoldibenzoat und/oder Diethylenglykolbenzoat, bei dem etwa 50 bis etwa 95% aller Hydroxylgruppen verestert worden sind, Phosphat-Weichmacher, beispielsweise t-Butylphenyldiphenylphosphat, Polyethylenglykole und deren Derivate, beispielsweise Diphenylether von Poly(ethylenglykol), flüssige Harzderivate, beispielsweise der Methylester von hydriertem Harz, pflanzliche und tierische Öle, beispielsweise Glycerinester von Fettsäuren und deren Polymerisationsprodukte.

Zu im Rahmen der Erfindung als Zusatzstoffe (F2) einsetzbaren Stabilisatoren oder Antioxidantien, zählen Phenole, sterisch gehinderte Phenole hohen Molekulargewichts (Mₙ), polyfunktionelle Phenole, schwefel- und phosphorhaltige Phenole oder Amine. Im Rahmen der Erfindung als Zusatzstoffe einsetzbare Phenole sind beispielsweise Hydrochinon, Hydrochinonmonomethylether 2,3-(Di-tert.-butyl)hydrochinon, 1,3,5-Trimethyl-2,4,6-tris(3,5-di-tert-butyl-4-hydroxybenzyl)benzol; Butylhydroxytoluol (BHT), Pentaerythrittetrakis-3-(3,5-di-tert-butyl-4-hydroxyphenyl)propionat; n-Octadecyl-3,5-di-tert-butyl-4-hydroxyphenyl)propionat; 4,4-Methylen-bis(2,6-di-tert-butyl-phenol); 4,4-Thiobis(6-tert-butyl-o-cresol); 2,6-Di-tert-butylphenol; 2,6-Di-tert-butyl-n-methylphenol; 6-(4-Hydroxyphenoxy)-2,4-bis(n-octyl-thio)-1,3,5-triazin; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tert-butyl-4-hydroxyphenyl)propionat], sowie p-Hydroxydiphenylamin oder N,N'-diphenylendiamin oder Phenothiazin.

Als Zusatzstoff kann das erfindungsgemäße strahlenhärtbare Bindemittel mit Barriere-Eigenschaften Mittel (F3) enthalten, die das Alterungsverhalten von insbesondere Klebungen gegenüber feuchter Atmosphäre verbessern. Typische Mittel (F3) sind zum Beispiel Ethylen/Acrylamid-Comonomere oder Phosphorderivate. Im Rahmen der Erfindung werden bevorzugt Phosphorderivate eingesetzt, wie sie in der WO 99/64529 (Seite 7, Zeile 14 bis Seite 9, Zeile 5) offenbart werden, beispielsweise 2-Methacryloyloyethyl-phosphat, Bis-(2-methacryloxyloxyethyl)phosphat, oder Mischungen daraus. Auch Carbonsäure-haltige Verbindungen können eingesetzt werden. Verbindungen dieser Art werden beispielsweise in der WO 01/16244 (Seite 7, Zeile 7 bis Seite 8, Zeile 31) oder in der WO 00/29456 (Seite 11, Zeile 15 bis Seite 12, Zeile 2) offenbart. Kommerziell verfügbare Produkte sind beispielsweise von UCB-Chemicals, B-1620 Drogenbos, Belgien unter der Produktklasse "Ebecryl", z.B. Ebecryl 168 oder Ebecryl 170, erhältlich.

Weitere Zusatzstoffe (F4) können in die erfindungsgemäßen strahlenhärtbaren Bindemittel mit Barriere-Eigenschaften mit aufgenommen werden, um bestimmte Eigenschaften zu variieren. Darunter können beispielsweise Farbstoffe wie Titandioxid, Füllstoffe wie Talkum, Ton und dergleichen sein.

Gegebenenfalls können in dem erfindungsgemäßen strahlenhärtbaren Bindemittel mit Barriere-Eigenschaften geringe Mengen an thermoplastischen nicht reaktiven Polymeren (F5) vorliegen, beispielsweise Ethylenvinylacetat (EVA), Ethylenacrylsäure, Ethylenmethacrylat und Ethylen-n-butylacrylatcopolymere, die dem Bindemittel gegebenfalls zusätzliche Flexibilität, Zähigkeit und Stärke verleihen. Es ist ebenfalls möglich, bestimmte hydrophile Polymere (F6) zuzugeben, beispielsweise Polyvinylalkohol, Hydroxyethylcellulose, Hydroxypropylcellulose, Polyvinylmethylether, Polyethylenoxid, Polyvinylpyrrolidon, Polyethyloxazoline oder Stärke oder Celluloseester, insbesondere die Acetate mit einem Substitutionsgrad von weniger als 2,5, welche beispielsweise die Benetzbarkeit des erfindungsgemäßen Bindemittel erhöhen können.

Die erfindungsgemäße Klebstoff-Zusammensetzung mit Barriere-Eigenschaften enthält bevorzugt
I) 5 bis 98 Gew.-%, bevorzugt 20 bis 97,5 Gew.-%, insbesondere bevorzugt 40 bis 95 Gew.-% einer Verbindung mit mindestens einer NCO-Gruppe und mindestens einer durch Bestrahlung härtbaren reaktiven funktionellen Gruppe als Komponente (A),
II) 2 bis 30 Gew.-%, bevorzugt 2,5 bis 20 Gew.-%, insbesondere bevorzugt 5 bis 15 Gew.-%, eines nanoskaligen Füllstoffes als Komponente (B),
III) 0 bis 90 Gew.-%, bevorzugt, 5 bis 60 Gew.-% einer Verbindung mit mindestens zwei funktionellen Gruppen mit mindestens einem aciden Wasserstoffatom als Komponente (C),
IV) 0 bis 80 Gew.-%, bevorzugt 0,5 bis 40 Gew.-% einer NCO-Gruppen freien Verbindung mit mindestens einer und bevorzugt zwei oder mehr durch Bestrahlung härtbaren reaktiven funktionellen Grupp(e) als Komponente (D),
V) 0 bis 15 Gew.-%, bevorzugt 0,5 bis 10 Gew.-%, insbesondere bevorzugt 1 bis 5 Gew.-% eines Photoinitiators als Komponente (E),
VI) 0 bis 50 Gew.-% Zusatzstoffe, ausgewählt aus der Gruppe Weichmacher, Stabilisatoren, Antioxidantien, Farbstoffe, oder Füllstoffe, als Komponente (F),
wobei die Summe der genannten Komponenten 100 Gew.-% ergibt.

In einer besonderen Ausgestaltungsform der Erfindung enthält die Klebstoff-Zusammensetzung mit Barriere-Eigenschaften
I) 15 bis 95 Gew.-% der Komponente (A) als Reaktionsprodukt aus einem monomerenarmen Polyurethan-Prepolymeren mit freien NCO-Gruppen und mindestens einem Hydroxyacrylat aus der Gruppe 2-Hydroxyethyl-(meth)acrylat, 2-Hydroxypropyl(meth)acrylat, 3-Hydroxypropyl(meth)acrylat, 6-Hydroxyhexyl(meth)acrylat, wobei das monomerenarme Polyurethan-Prepolymer ein Additionsprodukt aus
   a) mindestens einem Polyisocyanat der Gruppe IPDI, MDI oder TDI und
   b) mindestens einem Polyols mit einer molaren Masse von 150 g/mol bis 2000 g/mol
   darstellt.

Das monomerenarme Polyurethan-Prepolymer enthält weniger als 0,5 Gew.-%, bevorzugt weniger als 0,3 und insbesondere bevorzugt weniger als 0,1 Gew.-% freies Polyisocyanat der Gruppe IPDI, MDI oder TDI, bezogen auf die Gesamtmenge PU-Prepolymer

In einer insbesonders bevorzugten Ausgestaltungsform der Erfindung enthält die Klebstoff-Zusammensetzung 3 bis 10 Gew.-% eines mindestens trifunktionellen-Polyisocyanats.

Die erfindungsgemäße strahlenhärtbare Klebstoff-Zusammensetzung mit Barriere-Eigenschaften kann, je nach gefordertem Anwendungsbereich, noch bis zu 60 Gew.-% eines inerten Lösemittels enthalten.

Als Lösemittel sind grundsätzlich alle dem Fachmann bekannte Lösemittel verwendbar, insbesondere Ester, Ketone, halogenierte Kohlenwasserstoffe, Alkane, Alkene und aromatische Kohlenwasserstoffe. Beispiele für solche Lösemittel sind Methylenchlorid, Trichlorethylen, Toluol, Xylol, Butylacetat, Amylacetat, Isobutylacetat, Methylisobutylketon, Methoxybutylacetat, Cyclohexan, Cyclohexanon, Dichlorbenzol, Diethylketon, Di-isobutylketon, Dioxan, Ethylacetat, Ethylenglykolmonobutyletheracetat, Ethylenglykolmonoethylacetat, 2-Ethylhexylacetat, Glykoldiacetat, Heptan, Hexan, Isobutylacetat, Isooctan, Isopropylacetat, Methylethylketon, Tetrahydrofuran oder Tetrachlorethylen oder Mischungen aus zwei oder mehr der genannten Lösemittel.

Die Herstellung der erfindungsgemässen strahlenhärtbaren Klebstoff-Zusammensetzung mit Barriere-Eigenschaften kann durch übliche, dem Fachmann im Rahmen der Herstellung von polymeren Mischungen bekannten Techniken erfolgen.

Bevorzugt ist ein Verfahren zur Herstellung der erfindungsgemässen Klebstoff-Zusammensetzung, bei dem man den nanoskaligen Füllstoff als Komponente (B) in Komponente (C) und/oder Komponente (D) dispergiert und die so erhaltene(n) Dispersion(en) mit Komponente (A) vermischt.

Insbesondere ist bevorzugt ein Verfahren, bei dem man den nanoskaligen Füllstoff als Komponente (B) in Komponente (D) dispergiert, wobei man als Komponente (D) eine Verbindung (D1) auswählt, die bei Raumtemperatur fließfähig ist, insbesondere wählt man als Verbindung (D1) einen bei Raumtemperatur fließfähigen Ester der Acrylsäure oder Methacrylsäure aus.

Die erfindungsgemässen strahlenhärtbaren Klebstoff-Zusammensetzungen mit Barriere-Eigenschaften eignen sich zum Verkleben der unterschiedlichsten Verbundmaterialien. Zur diesen Materialien zählen beispielsweise Holz, Metall, Glas, Pflanzenfasern, Stein, Papier, Cellulosehydrat, Kunststoffe wie Polystyrol, Polyethylen, Polypropylen, Polyethylenterephthalat, Polyvinylchlorid, Copolymere von Vinylchlorid und Vinylidenchlorid, Copolymere von Vinylacetatolefinen, Polyamide, oder Metallfolien, beispielsweise aus Aluminium, Blei oder Kupfer.

Mit der erfindungsgemässen strahlenhärtbaren Klebstoff-Zusammensetzung werden Klebstoffe mit Barriere-Eigenschaften zur Verfügung gestellt, die sich bevorzugt für die Herstellung von Folienverbunden eignen.

Hierzu werden verschiedene Kunststofffolien untereinander und/oder mit Papierbahnen mit dem Klebstoff kaschiert bzw. laminiert.

Die Kunststofffolien können aus allen gängigen Kunststoffen zur Folienherstellung bestehen, beispielsweise aus Polyethylen, Polypropylen - insbesondere durch mono- oder biaxiale Streckung erzeugtes orientiertes Polypropylen (BOPP, OPP), Polyester, insbesondere Polyethylenterephthalat (PET), PVC, Polyamid oder Polyimid. Dabei können sowohl die Papierbahnen als auch die Kunststofffolien lackiert oder bedruckt sein. Die erfindungsgemässen strahlenhärtbaren Klebstoff-Zusammensetzungen mit Barriere-Eigenschaften können dabei mit allen gängigen Auftragsverfahren auf die zu verklebenden Substrate aufgebracht werden, beispielsweise durch Sprühen, Rakeln, 3-4-Walzenauftragswerke im Falle der Anwendung eines lösemittelfreien Klebstoffes oder 2 Walzenauftragswerke im Falle der Anwendung eines lösemittelhaltigen Klebstoffes.

Durch seine niedrige Viskosität eignet sich der Klebstoff insbesondere zum Verkleben temperaturempfindlicher Kunststofffolien, beispielsweise von Polyolefinfolien, insbesondere von Polyolefinfolien aus Polyethylen oder Polypropylen. Im Vergleich zu entsprechenden Folien aus dem Stand der Technik weisen die Folien ein verbessertes E-Modul und verbesserte Chemikalienbeständigkeit auf.

Durch einen geringen Gehalt an monomerem Polyisocyanat, gegegebenenfalls nach Aushärtung innerhalb einiger Stunden, erfüllt der Folienverbund die einschlägigen BGVV- bzw. EEC-Bestimmungen und eignet sich daher bevorzugt für die Herstellung flexibler Folienverbunde, die im Lebensmittelverpackungsbereich eingesetzt werden.

Ein weiterer Gegenstand der vorliegenden Erfindung ist daher auch ein Verfahren zur Herstellung von Folienverbunden, die durch das teil- oder vollflächige Verkleben von mindestens zwei gleichen oder unterschiedlichen Kunststofffolien erhältlich sind, unter Verwendung der erfindungsgemässen strahlenhärtbaren Klebstoff-Zusammensetzung mit Barriere-Eigenschaften.

Der Auftrag der Klebstoff-Zusammensetzung auf die zu verklebenden Folien kann mit üblicherweise für solche Zwecke eingesetzten Maschinen, beispielsweise mit herkömmlichen Laminiermaschinen erfolgen.

Besonders geeignet ist der Auftrag der im flüssigen Zustand vorliegenden Klebstoff-Zusammensetzung auf eine zu einem Laminat zu verklebende Folie, beispielsweise einer Folie aus Kunststoff, Metall oder Papier. Die Viskosität des Klebstoffes wird so gewählt, dass er bei typischen Verarbeitungstemperaturen eine Viskosität von etwa 1 000 mPas bis etwa 5 000 mPas (gemessen nach Brookfield, Digital Viscosimeter RVT DV-II, Spindel 27) aufweist. Typische Verarbeitungstemperaturen sind beispielsweise etwa 25 bis etwa 70 °C bei der Herstellung flexibler Verpackungsfolien (flexible packaging), etwa 70 bis etwa 80 °C bei der Kaschierung von Hochglanzfolien und etwa 80 bis etwa 130 °C bei Anwendungen im Textilbereich.

Die so mit der erfindungsgemässen lösemittelhaltigen oder lösemittelfreien strahlenhärtbaren Klebstoff-Zusammensetzung mit Barriere-Eigenschaften beschichtete Folie wird zunächst im Trockenkanal bei 40 bis 120 °C thermisch anvemetzt (-kondensiert), dann mit mindestens einer weiteren Folie, ggf. unter Druck, kaschiert und anschließend bestrahlt, oder bestrahlt und dann kaschiert.

Das erfindungsgemäße strahlenhärtbare Bindemittel mit Barriere-Eigenschaften gewinnt durch die Bestrahlung und die damit verbundene Vernetzungsreaktion an Molekulargewicht, hat dadurch mehr Kohäsion und besitzt eine haftklebrige Oberfläche. Erfolgt die Bestrahlung mittels UV-Licht , enthält das erfindungsgemäß eingesetzte Bindemittel mindestens einen Photoinitiator als Komponente (E).

Das beschriebene Verfahren kann mehrfach wiederholt werden, so dass Folienverbunde hergestellt werden können, die aus mehr als zwei verklebten Schichten bestehen.

Das erfindungsgemäße Verfahren kann unter Schutzgasatmosphäre, also in Anwesenheit inerter Gase wie Stickstoff durchgeführt werden Es ist aber auch vorteilhafterweise unter Normalatmosphäre, wie sie typischerweise in den Produktionshallen vorherrscht, problemlos durchführbar.

Ein weiterer Gegenstand der Erfindung ist eine Verbundfolie, hergestellt nach dem erfindungsgemäßen Verfahren unter Verwendung der erfindungsgemässen Klebstoff-Zusammensetzung. Die Verbundfolie ist insbesondere als Barriere-Folie zur Verpackung, insbesondere zur Verpackung von Lebens- und Genussmitteln und Arzneimitteln geeignet. Die In der Praxis der Lebensmittelverpackung spricht man von Barriere-Folien, wenn die Sauerstoffdurchlässigkeit Q (O₂) < 100 cm³/( m² x Tag x bar) und die Wasserdampfdurchlässigkeit Q (H₂O) < 10 g/(m² xTag) bei 23 °C und 85 % rel. Feuchte beträgt (Delventhal, Verpackungs-Rundschau 3/1991, Seite 19-23).

Die Verbundfolie, hergestellt nach dem erfindungsgemässen Verfahren, besitzt Barriere-Eigenschaften, insbesondere gegenüber CO₂, O₂, N₂, Wasserdampf und Aromastoffen.

## Patentansprüche

1. Klebstoff-Zusammensetzung mit Barriere-Eigenschaften, enthaltend
a) eine Verbindung mit mindestens einer NCO-Gruppe und mindestens einer durch Bestrahlung härtbaren reaktiven funktionellen Gruppe als Komponente (A) und
b) einen nanoskaligen Füllstoff als Komponente (B).

2. Klebstoff-Zusammensetzung nach Anspruch 1, **dadurch gekennzeichnet, dass** sie zusätzlich
c) eine Verbindung mit mindestens zwei funktionellen Gruppen mit jeweils mindestens einem aciden Wasserstoffatom als Komponente (C)
und/oder
d) eine NCO-Gruppen freie Verbindung mit mindestens einer und bevorzugt zwei oder mehr durch Bestrahlung härtbaren reaktiven funktionellen Gruppe(n) als Komponente (D),
enthält.

3. Klebstoff-Zusammensetzung nach Anspruch 1 oder 2, **dadurch gekennzeichnet, dass** sie bei 70 °C eine Viskosität von 100 mPa.s bis 26 000 mPa.s (gemessen nach Brookfield, Digital Viscosimeter RVT DV-II, Spindel 27) aufweist.

4. Klebstoff-Zusammensetzung nach einem der Ansprüche 1 bis 3, **dadurch gekennzeichnet, dass** Komponente (A) ein Reaktionsprodukt ist von mindestens einem Polyisocyanat mit mindestens einem (Meth)acrylat der allgemeinen Formel
1 2 H₂C=CR -C(=O)-O-R -Y (II)
mit :
Y= eine gegenüber NCO-Gruppen reaktive Gruppe, bevorzugt OH, COOH, SH, NH₂, NHR³;
R¹ = H, CH₃;
R²= gesättigte oder ungesättigte lineare oder verzweigte Alkylengruppe mit 2 bis 21 Kohlenstoffatomen, bevorzugt mit 2 bis 6 Kohlenstoffatomen, insbesondere eine Ethylen-, Propylen-, Isopropylen-, n-Butylen-, Isobutylen-Gruppe, oder eine C2-C4-Alkylenoxid-Gruppe, bevorzugt eine Ethylenoxid- und/oder Propylenoxidgruppe, insbesondere bevorzugt eine Ethylenoxidgruppe mit 2 bis 10 Ethylenoxideinheiten und/oder eine Propylenoxidgruppe mit 1 bis 7 Propylenoxideinheiten;
R³= linearer oder verzweigter, gesättigter oder ungesättigter C₁-C₁₈-Alkylrest; C₅-C₈-Cycloalkyl, C₆-C₁₀-Aryl, C₇-C₁₂-Aralkyl;

5. Klebstoff-Zusammensetzung nach Anspruch 4, **dadurch gekennzeichnet, dass** das Polyisocyanat ein monomeres Polyisocyanat ist aus der Gruppe 1,5-Naphthylendiisocyanat, 2,2'-, 2,4- und/oder 4,4'-Diphenylmethandiisocyanat (MDI), die Isomeren des Toluylendiisocyanats (TDI), 1-Isocyanatomethyl-3-isocyanato-1,5,5-trimethylcyclohexan (IPDI), Hexan-1,6-diisocyanat (HDI) Tetramethylxylylendiisocyanat (TMXDI), Trimerisierungsprodukte der Isocyanate HDI, MDI, TDI oder IPDI; und NCO-terminierte Polyurethan-Prepolymere; sowie Gemische daraus.

6. Klebstoff-Zusammensetzung nach Anspruch 5, **dadurch gekennzeichnet, dass** das Polyisocyanat ein NCO-teminiertes Polyurethan-Prepolymeres ist mit weniger als 0,5 Gew.-% freiem Polyisocyanat aus der Gruppe IPDI, MDI, TDI, bezogen auf die Gesamtmenge PU-Prepolymer.

7. Klebstoff-Zusammensetzung nach einem der Ansprüche 1 bis 6, **dadurch gekennzeichnet, dass** der nanoskalige Füllstoff ausgewählt ist aus der Gruppe: Oxide, Nitride, Halogenide, Sulfide, Carbide, Telluride, Selenide der zweiten bis vierten Hauptgruppe, der Übergangselemente oder der Lanthanide.

8. Klebstoff-Zusammensetzung nach Anspruch 7, **dadurch gekennzeichnet, dass** der nanoskalige Füllstoff ausgewählt ist aus der Gruppe: Bayerit, Gibbsit, Diaspor, Bentonit, Hydrotalcit, Kaolinit, Glimmer, Boehmit, Vermiculit oder deren Mischungen, Magnesiumsilikat, Alluminiumsilikat, Montmorillonit, Saponit, Beidellit, Nontronit, Hectorit, Stevensit, Vermiculit, Halloysit oder deren synthetische Analoga, die Quarz-Modifikation des Siliciumdioxids, Magnesiumoxid, Aluminiumoxid, Magnesiumfluorid, Cadmiumsulfid, Zinksulfid, Cadmiumselenid.

9. Klebstoff-Zusammensetzung nach einem der Ansprüche 1 bis 8, enthaltend
I) 5 bis 98 Gew.-%, bevorzugt 20 bis 97,5 Gew.-%, insbesondere bevorzugt 40 bis 95 Gew.-% einer Verbindung mit mindestens einer NCO-Gruppe und mindestens einer durch Bestrahlung härtbaren reaktiven funktionellen Gruppe als Komponente (A),
II) 2 bis 30 Gew.-%, bevorzugt 2,5 bis 20 Gew.-%, insbesondere bevorzugt 5 bis 15 Gew.-%, eines nanoskaligen Füllstoffes als Komponente (B),
III) 0 bis 90 Gew.-%, bevorzugt, 5 bis 60 Gew.-% einer Verbindung mit mindestens zwei funktionellen Gruppen mit mindestens einem aciden Wasserstoffatom als Komponente (C),
IV) 0 bis 80 Gew.-%, bevorzugt 0,5 bis 40 Gew.-% einer NCO-Gruppen freien Verbindung mit mindestens einer und bevorzugt zwei oder mehr durch Bestrahlung härtbaren reaktiven funktionellen Grupp(e) als Komponente (D),
V) 0 bis 15 Gew.-%, bevorzugt 0,5 bis 10 Gew.-%, insbesondere bevorzugt 1 bis 5 Gew.-% eines Photoinitiators als Komponente (E),
VI) 0 bis 50 Gew.-% Zusatzstoffe, ausgewählt aus der Gruppe Weichmacher, Stabilisatoren, Antioxidantien, Farbstoffe, oder Füllstoffe, als Komponente (F),
wobei die Summe der genannten Komponenten 100 Gew-% ergibt.

10. Verfahren zur Herstellung einer Klebstoff-Zusammensetzung nach einem der Ansprüche 2 bis 9, **dadurch gekennzeichnet, daß** man den nanoskaligen Füllstoff als Komponente (B) in Komponente (C) und/oder Komponente (D) dispergiert und die so erhaltene(n) Dispersion(en) mit Komponente (A) vermischt.

11. Verfahren nach Anspruch 10, **dadurch gekennzeichnet, daß** man den nanoskaligen Füllstoff als Komponente (B) in Komponente (D) dispergiert, wobei man als Komponente (D) eine Verbindung (D1) auswählt, die bei Raumtemperatur fließfähig ist, insbesondere wählt man als Verbindung (D1) einen bei Raumtemperatur fließfähigen Ester der Acrylsäure oder Methacrylsäure aus.

12. Verwendung der Klebstoff-Zusammensetzung nach einem der Ansprüche 1 bis 9 als strahlenhärtbaren 1-Komponenten (1K)- oder 2-Komponenten (2K)-Klebstoff, insbesondere als 1K- oder 2K-Kaschierklebstoff.

13. Verfahren zur Herstellung von Folienverbunden aus mindestens zwei gleichen oder unterschiedlichen Kunststofffolien, **dadurch gekennzeichnet, dass** man eine Klebstoff-Zusammensetzung nach einem der Ansprüche 1 bis 9 verwendet.

14. Verbundfolie, erhältlich durch das Verfahren nach Anspruch 13.

15. Verbundfolie nach Anspruch 14 mit Barriere-Eigenschaften, insbesondere mit Barriere-Eigenschaften gegenüber CO₂, O₂, N₂, Wasserdampf und Aromastoffen.

16. Verwendung einer Verbundfolie nach Anspruch 14 oder 15 zur Verpackung von Lebens- und Genußmitteln und Arzneimitteln.

## Claims

1. An adhesive composition with barrier properties, containing
a) a compound with at least one NCO group and at least one radiation-curable reactive functional group as a component (A) and
b) a nanoscale filler as a component (B).

2. The adhesive composition according to claim 1, **characterized in that** it further contains.
c) a compound with at least two functional groups, each with at least one acid hydrogen atom as a component (C).
and/or
d) a compound free of NCO groups, with at least one, and preferably two or more radiation-curable reactive functional groups as a component (D).

3. The adhesive composition according to claim 1 or 2, **characterized in that** it has a viscosity from 100 mPa.s to 26,000 mPa.s at 70°C (as measured with a Brookfield digital viscosimeter RVT DV-II, spindle 27).

4. The adhesive composition according to one of claims 1 to 3, **characterized in that** the component (A) is a reaction product of at least one polyisocyanate with at least one (meth)acrylate of general formula
H₂C=CR¹-C(=O)-O-R²-Y (II)
with:
Y = a group reactive towards NCO groups, preferably OH, COOH, SH, NH₂, NHR³;
R¹ = H, CH₃;
R² = a saturated or unsaturated, linear or branched alkylene group with 2 to 21 carbon atoms, preferably with 2 to 6 carbon atoms, in particular an ethylene, propylene, isopropylene, n-butylene, isobutylene group, or a C₂-C₄ alkylene oxide group, preferably an ethylene oxide and/or propylene oxide group, more preferably an ethylene oxide group with 2 to 10 ethylene oxide units and/or a propylene oxide, with 1 to 7 propylene oxide units;
R³ = a linear or branched, saturated or unsaturated C₁-C₁₈ alkyl radical, C₅-C₈ cycloalkyl, C₆-C₁₀ aryl, C₇-C₁₂ aralkyl radical.

5. The adhesive composition according to claim 4, **characterized in that** the polyisocyanate is a monomeric polyisocyanate from the group of 1,5-naphthylene-diisocyanate, 2,2'-, 2,4- and/or 4,4'-diphenylmethane-diisocyanate (MDI), the isomers of toluylene-disocyanate (TDI), 1-isocyanatomethyl-3-isocyanato-1,5,5-trimethylcyclohexane (IPDI), hexane-1,6-diisocyanate (HDI), tetramethylxylylene-diisocyanate (TMXDI), trimerization products of HDI, MDI, TDI or IPDI isocyanates; and NCO-terminated polyurethane prepolymers; as well as mixtures thereof.

6. The adhesive composition according to claim 5, **characterized in that** the polyisocyanate is a NCO-terminated polyurethane prepolymer with less than 0.5% by weight of free polyisocyanate from the group of IPDI, MDI, TDI, based on the total amount of PU prepolymer.

7. The adhesive composition according to one of claims 1 to 6, **characterized in that** the nanoscale filler is selected from the group: oxides, nitrides, halides, sulfides, carbides, tellurides, selenides, of the second to fourth main Group, of the transition elements or lanthanides.

8. The adhesive composition according to claim 7, **characterized in that** the nanoscale filler is selected from the group: bayerite, gibbsite, diaspor, bentonite, hydrotalcite, kaolinite, mica, boehmite, vermiculite, or mixtures thereof, magnesium silicate, aluminium silicate, montmorillonite, saponite, beidellite, nontronite, hectorite, stevensite, vermiculite, halloysite or synthetic analogs, the quartz modification of silicon dioxide, magnesium oxide, aluminium oxide, magnesium fluoride, cadmium sulfide, zinc sulfide, cadmium selenide.

9. The adhesive composition according to one of claims 1 to 8, containing
I) 5 to 98% by weight, preferably 20 to 97.5% by weight, more preferably, 40 to 95% by weight of a compound with at least one NCO group and at least one radiation-curable reactive functional group as a component (A),
II) 2 to 30% by weight, preferably 2.5 to 20% by weight, more preferably 5 to 15% by weight, of a nanoscale filler as a component (B),
III) 0 to 90% by weight, preferably 5 to 60% by weight of a compound with at least two functional groups, with at least one acid hydrogen atom as a component (C),
IV) 0 to 80% by weight, preferably 0.5 to 40% by weight of a compound free of NCO groups, with at least one and preferably two or more radiation-curable reactive functional groups as a component (D),
V) 0 to 15% by weight, preferably 0.5 to 10% by weight, more preferably 1 to 5% by weight of a photo-initiator as a component (E),
VI) 0 to 50% by weight of the additives, selected from the group of plasticizers, stabilizers, antioxidants, dyes, or fillers, as a component (F),
wherein the sum of the cited components gives 100% by weight.

10. A method for preparing an adhesive composition according to one of claims 2 to 9, **characterized in that** the nanoscale filler as a component (B) is dispersed in component (C) and/or component (D) and the thereby obtained dispersion(s) is/are mixed with component (A).

11. The method according to claim 10, **characterized in that** the nanoscale filler as a component (B) is dispersed in component (D), wherein as a component (D), a compound (D1) is selected, which is free-flowing at room temperature, in particular an ester of acrylic acid or methacrylic acid, free-flowing at room temperature, is selected as a compound (D1).

12. The use of the adhesive composition according to one of claims 1 to 9, as a one-component (1C) or two-component (2C) adhesive curable by irradiation, in particular as a laminating 1C- or 2C-adhesive.

13. A method for preparing film composites out of at least two identical or different plastic films, **characterized in that** an adhesive composition according to one of claims 1 to 9, is used.

14. A composite film, which may be obtained by the method according to claim 13.

15. The composite film according to claim 14, with barrier properties, in particular with barrier properties towards CO₂, O₂, N₂, steam and aromatic substances.

16. The use of a composite film according to claim 14 or 15 for packaging foodstuffs and luxury foodstuffs and drugs.

## Revendications

1. Composition d'adhésif présentant des propriétés de barrière, contenant :
a) un composé comprenant au moins un groupe NCO et au moins un groupe fonctionnel réactif durcissable par exposition à un rayonnement, à titre de composant (A) ; et
b) une matière de charge à l'échelle du nanomètre, à titre de composant (B).

2. Composition d'adhésif selon la revendication 1, **caractérisée en ce qu'**elle contient en outre :
c) un composé comprenant au moins deux groupes fonctionnels avec respectivement au moins un atome d'hydrogène acide, à titre de composant (C)
et/ou
d) un composé exempt de groupes NCO comprenant au moins un et de préférence deux groupes fonctionnels réactifs ou plus durcissables par exposition à un rayonnement, à titre de composant (D).

3. Composition d'adhésif selon la revendication 1 ou 2, **caractérisée en ce qu'**elle présente, à 70 °C, une viscosité de 100 mPa.s à 26000 mPa.s (mesurée selon Brookfield, viscosimètre numérique RVT DV-II, broche 27).

4. Composition d'adhésif selon l'une quelconque des revendications 1 à 3, **caractérisée en ce que** le composant (A) représente un produit réactionnel d'au moins un polyisocyanate avec au moins un (méth)acrylate répondant à la formule générale :
H₂C=CR¹-C(=O)-O-R²-Y (II)
dans laquelle
Y représente un groupe apte à réagir vis-à-vis de groupes NCO, de préférence un groupe OH, un groupe COOH, un groupe SH, un groupe NH₂, un groupe NHR³ ;
R¹ représente un atome d'hydrogène, un groupe CH₃ ;
R² représente un groupe alkylène linéaire ou ramifié, saturé ou insaturé contenant de 2 à 21 atomes de carbone, de préférence de 2 à 6 atomes de carbone, en particulier un groupe éthylène, un groupe propylène, un groupe isopropylène, un groupe n-butylène, un groupe isobutylène, ou un groupe d'oxyde d'alkylène en C₂-C₄, de préférence un groupe d'oxyde d'éthylène et/ou d'oxyde de propylène, de manière particulièrement préférée, un groupe d'oxyde d'éthylène contenant de 2 à 10 unités d'oxyde d'éthylène et/ou un groupe d'oxyde de propylène contenant de 1 à 7 unités d'oxyde de propylène ;
R³ représente un radical alkyle en C₁-C₁₈ saturé ou insaturé, linéaire ou ramifié, un groupe cycloalkyle en C₅-C₈, un groupe aryle en C₆-C₁₀, un groupe aralkyle en C₇-C₁₂.

5. Composition d'adhésif selon la revendication 4, **caractérisée en ce que** le polyisocyanate représente un polyisocyanate monomère choisi parmi le groupe du 1,5-naphtylènediisocyanate, du 2,2'-, 2,4- et/ou 4,4'-diphénylméthanediisocyanate (MDI), des isomères du toluylénediisocyanate (TDI), du 1-isocyanatométhyl-3-isocyanato-1,5,5-triméthylcyclohexane (IPDI), de l'hexane-1,6-diisocyanate (HDI), du tétraméthylxylylènediisocyanate (TMXDI), des produits de trimérisation des isocyanates HDI, MDI, TDI ou IPDI, et des prépolymères de polyuréthane à terminaison NCO, ainsi que leurs mélanges.

6. Composition d'adhésif selon la revendication 5, **caractérisée en ce que** le polyisocyanate représente un prépolymère de polyuréthane à terminaison NCO comprenant moins de 0,5 % en poids de polyisocyanate libre, choisi parmi le groupe du IPDI, du MDI, du TDI, rapporté à la quantité totale du prépolymère de PU.

7. Composition d'adhésif selon l'une quelconque des revendications 1 à 6, **caractérisée en ce que** la matière de charge à l'échelle du nanométre est choisie parmi le groupe comprenant : des oxydes, des nitrures, des halogénures, des sulfures, des carbures, des tellurures, des séléniures du deuxième au quatrième groupe principal, des éléments de transition ou des lanthanides.

8. Composition d'adhésif selon la revendication 7, **caractérisée en ce que** la matière de charge à l'échelle du nanomètre est choisie parmi le groupe comprenant : la bayerite, la gibbsite, le diaspore, la bentonite, l'hydrotalcite, la kaolinite, le mica, la böhmite, la vermiculite ou leurs mélanges, le silicate de magnésium, le silicate d'aluminium, la montmorillonite, la saponite, la beidelite, la nontronite, l'hectorite, la stevensite, la vermiculite, l'halloysite ou leurs analogues synthétiques, la modification quartz du dioxyde de silicium, l'oxyde de magnésium, l'oxyde d'aluminium, le fluorure de magnésium, le sulfure de cadmium, le sulfure de zinc, le séléniure de cadmium.

9. Composition d'adhésif selon l'une quelconque des revendications 1 à 8, contenant :
I) de 5 à 98 % en poids, de préférence de 20 à 97,5 % en poids, de manière particulièrement préférée de 40 à 95 % en poids d'un composé comprenant au moins un groupe NCO et au moins un groupe fonctionnel réactif durcissable par exposition à un rayonnement, à titre de composant (A) ;
II) de 2 à 30 % en poids, de préférence de 2,5 à 20 % en poids, de manière particulièrement préférée de 5 à 15 % en poids d'une matière de charge à l'échelle du nanomètre, à titre de composant (B) ;
III) de 0 à 90 % en poids, de préférence de 5 à 60 % en poids d'un composé comprenant au moins deux groupes fonctionnels avec respectivement au moins un atome d'hydrogène acide, à titre de composant (C) ;
IV) de 0 à 80 % en poids, de préférence de 0,5 à 40 % en poids d'un composé exempt de groupes NCO comprenant au moins un et de préférence deux groupes fonctionnels réactifs ou plus durcissables par exposition à un rayonnement, à titre de composant (D) ;
V) de 0 à 15 % en poids, de préférence de 0,5 à 10 % en poids, de manière particulièrement préférée de 1 à 5 % en poids d'un photoinitiateur, à titre de composant (E) ;
VI) de 0 à 50 % en poids d'additifs choisis parmi le groupe comprenant des plastifiants, des stabilisateurs, des antioxydants, des colorants ou des matières de charge, à titre de composant (F) ;
la somme des composants mentionnés donnant 100 % en poids.

10. Procédé pour la préparation d'une composition d'adhésif selon l'une quelconque des revendications 2 à 9, **caractérisé en ce qu'**on disperse la matière de charge à l'échelle du nanomètre à titre de composant (B) dans le composant (C) et/ou dans le composant (D), et on mélange la/les dispersion(s) ainsi obtenue(s) avec le composant (A).

11. Procédé selon la revendication 10, **caractérisé en ce qu'**on disperse la matière de charge à l'échelle du nanomètre à titre de composant (B) dans le composant (D), en choisissant comme composant (D), un composé (D1) qui est fluide à la température ambiante ; en particulier, on sélectionne, à titre de composé (D1), un ester d'acide acrylique ou d'acide méthacrylique, fluide à la température ambiante.

12. Utilisation d'une composition d'adhésif selon l'une quelconque des revendications 1 à 9, sous la forme d'un adhésif à un seul composant (1K) ou à deux composants (2K) durcissable par exposition à un rayonnement, en particulier sous la forme d'un adhésif de contrecollage 1K ou 2K.

13. Procédé pour la fabrication de composites en feuilles constitués par au moins deux feuilles identiques ou différentes en matière synthétique, **caractérisé en ce qu'**on utilise une composition d'adhésif selon l'une quelconque des revendications 1 à 9.

14. Feuille composite que l'on obtient via le procédé selon la revendication 13.

15. Feuille composite selon la revendication 14 possédant des propriétés de barrière, en particulier des propriétés de barrière vis-à-vis du CO₂, du O₂, du N₂, de la vapeur d'eau et vis-à-vis de substances aromatiques.

16. Utilisation d'une feuille composite selon la revendication 14 ou 15, pour l'emballage de denrées alimentaires et de denrées de luxe, ainsi que de médicaments.
